(19) 

Europäisches Patentamt
European Patent Office
Office européen des brevets

(11) EP 2 128 393 A1

(12) EUROPEAN PATENT APPLICATION

(43) Date of publication:
02.12.2009 Bulletin 2009/49

(51) Int Cl.:
F01N 3/023 (2006.01)     F01N 9/00 (2006.01)

(21) Application number: 08172541.8

(22) Date of filing: 22.12.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 29.05.2008 KR 20080050298

(71) Applicants:
• Hyundai Motor Company
Seoul (KR)

• KIA MOTORS CORPORATION
Seocho-gu,
Seoul (KR)

(72) Inventor: Kim, Joo Youn
Ansan-city (KR)

(74) Representative: Viering, Jentschura & Partner
Grillparzerstrasse 14
81675 München (DE)

(54) **Exhaust gas post-processing apparatus and regeneration method thereof**

(57) An exhaust gas post-processing apparatus, may include an exhaust pipe through which exhaust gas passes, a particulate material catalyst (60) that is mounted in the exhaust pipe, that collects particulate materials included in the exhaust gas, and that is regenerated by NO2, and a control portion that increases amount of NOx supplied from an engine (10) so as to increase amount of NO2 supplied to the particulate material catalyst (60) to improve regeneration efficiency of the PMC for a predetermined time period according to driving conditions of a vehicle.

FIG.1

EP 2 128 393 A1

**Description**

**CROSS-REFERENCE TO RELATED APPLICATION**

The present application claims priority to Korean Patent Application Number 10-2008-0050298 filed May 29, 2008, the entire contents of which application is incorporated herein for all purposes by this reference.

**BACKGROUND OF THE INVENTION**

**Field of the Invention**

The present invention relates to an exhaust gas post-processing apparatus, and more particularly, to an exhaust gas post-processing apparatus and a method thereof for regenerating a particulate material catalyst (PMC).

**Description of Related Art**

The NOx generation amount of a diesel engine, which is operated with a high compression ratio, is reduced by more than 30% compared with a general engine, but CO and THC can be increased by two to three times that of the general engine.

A variety of post-processing devices are mounted in vehicles so as to eliminate harmful materials such as NOx, CO, THC, soot, particulate materials (PM), and so on that are included in exhaust gas to correspond to regulations for the North America diesel Tier2/BIN5 or regulations for a EURO 6.

The post-processing devices includes a diesel oxidation catalyst (DOC) that is mounted on the exhaust pipe to deal with non-methane hydrocarbons (NMHC), and a particulate material catalyst (PMC) that is disposed at a downstream side of the DOC for collecting soot and PM.

The DOC oxidizes harmful materials such as CO, HC, and NO to $CO_2$ and $H_2O$ through a reaction with a platinum based catalyst that is coated on a ceramic support, and simultaneously increases the concentration of $NO_2$ through the following formula 1.

$$\textit{Formula 1} \qquad 2NO + O2 \rightarrow 2NO2$$

Further, the PMC physically collects soot and PM that are contained in the exhaust gas, and is regenerated by the $NO_2$ that is generated in the DOC through the below Formula 2.

$$\textit{Formula 2} \qquad 2NO2 + C \rightarrow CO2 + 2NO$$

However, as the collected amount of soot and PM is increased, the regeneration efficiency thereof is rapidly deteriorated.

Herein, pressure difference sensors are mounted on front and rear sides of the PMC to detect the collected amount of soot and PM, and thereby the regeneration timing is determined for the PMC to be regenerated through post-injection according to the collected amount.

The regeneration of the PMC is not securely executed in a conventional diesel vehicle, and as the travel mileage of a vehicle increases, the quality of the exhaust gas is deteriorated.

Particularly, because the exhaust gas regulations of EURO 5 is strengthened by 40% more than that of EURO 4, the NOx passing the PMC is to be increased.

However, due to a shortage of the NOx, the PMC is not sufficiently regenerated such that the regeneration efficiency is deteriorated, and due to the accumulation of the soot and PM, back pressure is increased to increase fuel consumption and to deteriorate the output of the vehicle.

When the platinum based coating amount is increased so as to increase the NOx for sufficiently regenerating the PMC, production cost is also increased.

Further, when the PMC is only regenerated through the post-injection of the fuel, the fuel/air ratio is deteriorated and the fuel consumption is increased.

The information disclosed in this Background of the Invention section is only for enhancement of understanding of the general background of the invention and should not be taken as an acknowledgement or any form of suggestion that this information forms the prior art already known to a person skilled in the art.

**BRIEF SUMMARY OF THE INVENTION**

Various aspects of the present invention are directed to provide an exhaust gas post-processing apparatus and a regeneration method thereof having advantages of securely regenerating a particulate material catalyst in predetermined cycles by increasing an amount of NOx generation.

In an aspect of the present invention, an exhaust gas post-processing apparatus, may include an exhaust pipe through which exhaust gas passes, a particulate material catalyst (PMC) that is mounted in the exhaust pipe, that collects particulate materials included in the exhaust gas, and that is regenerated by NO2, and/or a control portion that increases amount of NOx supplied from an engine so as to increase amount of NO2 supplied to the PMC to improve regeneration efficiency of the PMC for a predetermined time period according to driving conditions of a vehicle.

The predetermined time period may be approximately ten minutes.

The exhaust gas post-processing apparatus may further include a diesel oxidation catalyst (DOC) that is mounted between the engine and the PMC to purify the exhaust gas and that uses the NOx supplied from the engine to generate the NO2.

The DOC may include a ceramic support on which platinum is coated to transform CO, HC, and NO to CO2, H2O, and NO2.

The PMC may collect soot and the particulate materials and is regenerated by eliminating the collected soot and the particulate materials through reaction with the N02 supplied from the DOC.

The driving conditions of the vehicle may be determined to be satisfied and thus the control portion increases the amount of the NOx for the predetermined time period while a total integrated travel distance of the vehicle is larger than a predetermined travel distance and travel time period after the engine is operated elapses a predetermined travel time period.

The control portion may control air/fuel ratio, EGR valve opening rate, injection timing retarding rate, and/or vane angle of a turbo charger for the predetermined time period to increase the amount of the NOx.

The control portion may close the EGR valve for exhaust gas not to be re-circulated to combustion chamber of the engine to raise temperature in the combustion chamber.

The control portion may retard the injection timing of fuel to increase the amount of the NOx.

The control portion may adjust an opening rate of the vane of the turbocharger to reduce intake air amount so that concentration of fuel as well as that of the NOx are raised to increase temperature of exhaust gas.

The predetermined travel distance may be approximately 10,000 km.

The predetermined travel time period may be approximately 100 hours.

In another aspect of the present invention, a regeneration method of an exhaust gas post-processing apparatus, may include a determining step in which a total integrated travel distance of a vehicle, a travel distance of the vehicle, and a travel time period after an engine is operated are detected to determine whether a condition of a PMC to be at a regeneration step is satisfied, and/or the regeneration step in which the PMC is regenerated by increasing amount of NOx supplied to the PMC, the NOx being generated by the engine for a predetermined time period, while the condition of the PMC to be at the regeneration step is determined to be satisfied, wherein the predetermined time period is approximately ten minutes.

The condition of the PMC to be at the regeneration step may be determined to be satisfied when the total integrated travel distance is larger than a predetermined travel distance and the travel time period after the engine is operated elapses a predetermined travel time period.

The predetermined travel distance may be approximately 10,000 km and the predetermined travel time period is approximately 100 hours.

The control portion may control air/fuel ratio, EGR valve opening rate, injection timing retarding rate, and/or vane angle of a turbo charger for the predetermined time period to increase the amount of the NOx.

The control portion may close the EGR valve for exhaust gas not to be re-circulated to combustion chamber of the engine to raise temperature in the combustion chamber.

The control portion may retard the injection timing of fuel to increase the amount of the NOx.

The control portion may adjust an opening rate of the vane of the turbocharger to reduce intake air amount so that concentration of fuel as well as that of the NOx are raised to increase temperature of exhaust gas.

The methods and apparatuses of the present invention have other features and advantages which will be apparent from or are set forth in more detail in the accompanying drawings, which are incorporated herein, and the following Detailed Description of the Invention, which together serve to explain certain principles of the present invention.

## BRIEF DESCRIPTION OF THE DRAWINGS

FIG. 1 shows intake and exhaust systems of a diesel vehicle according to an exemplary embodiment of the present invention.

FIG. 2 shows a regeneration flowchart of a post-processing device in a diesel vehicle according to an exemplary embodiment of the present invention.

## DETAILED DESCRIPTION OF THE INVENTION

Reference will now be made in detail to various embodiments of the present invention(s), examples of which are illustrated in the accompanying drawings and described below. While the invention(s) will be described in conjunction with exemplary embodiments, it will be understood that present description is not intended to limit the invention(s) to those exemplary embodiments. On the contrary, the invention(s) is/are intended to cover not only the exemplary embodiments, but also various alternatives, modifications, equivalents and other embodiments, which may be included within the spirit and scope of the invention as defined by the appended claims.

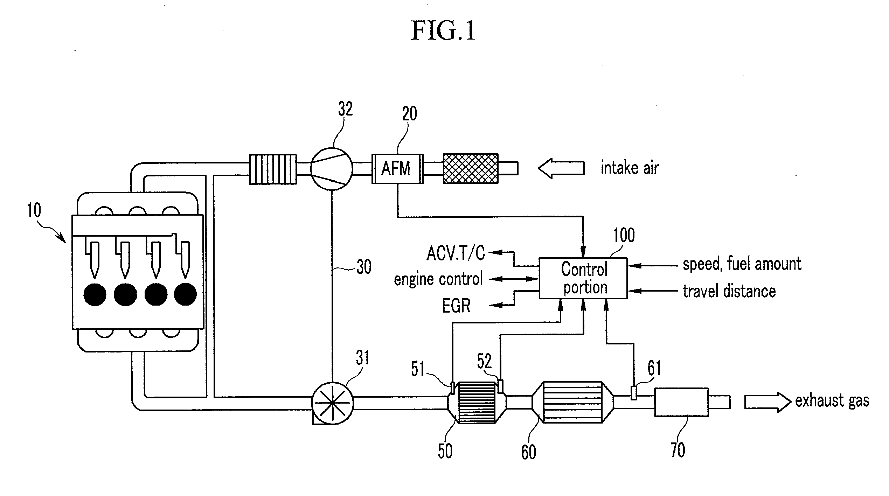

FIG. 1 shows intake and exhaust systems of a diesel vehicle according to various embodiments of the present invention.

In a diesel vehicle, an impeller 31 of a turbocharger (T/C) 30 is mounted in one portion of the exhaust pipe of an engine 10, and a turbine 32 that is connected to the impeller 31 is mounted on an intake pipe to turbocharge intake air into the engine 10.

A diesel oxidation catalyst (DOC) 50 is disposed at a downstream side of the impeller 31, and a particulate material catalyst (PMC) 60 is disposed at a downstream side of the DOC 50.

The DOC 50 includes a ceramic support on which platinum (Pt) is coated, and transforms harmful materials such as CO, HC, and NO to $CO_2$, $H_2O$, and $NO_2$ through an oxidation reaction with the catalyst.

A temperature sensor 51 is installed at an upstream side of the DOC 50 and a temperature sensor 52 is installed at a downstream side of the DOC 50 to detect temperature of the exhaust gas at the front and rear of the DOC 50, and the detected signal is transferred to a control portion 100.

The PMC 60 physically collects soot and particulate materials (PM) that are included in the exhaust gas passing the DOC 50, and uses $NO_2$ to eliminate the soot and PM.

A NOx sensor 61 is disposed at a downstream side of the PMC 60 to transfer a signal regarding purification efficiency with respect to the NOx to the control portion 100.

At the downstream side of the PMC 60, a muffler 70 is installed to reduce a noise of the exhaust gas.

In a condition in which the engine is operated, the control portion 100 increases the NOx amount to regenerate the PMC 60 for a predetermined time period, about ten minutes, while a total integrated travel distance of a vehicle is larger than a predetermined travel distance and the travel time period after an engine of the vehicle is operated is longer than a predetermined travel time period.

The predetermined travel distance can be set to 10,000 kilometers, and the predetermined travel time period can be set to 100 hours.

If the above condition is satisfied, the control portion 100 closes an EGR valve for the exhaust gas not to be re-circulated to the combustion chamber for the predetermined time period, about ten minutes, and thereby the temperature of the combustion chamber is raised to increase the NOx amount in the exhaust gas.

Also, the control portion 100 retards injection timing for the predetermined time period, i.e., about ten minutes to increase the NOx.

Also, the control portion 100 adjusts an opening rate of a vane of the T/C 30 for the predetermined time period, about 10 minutes, to reduce the intake air amount, and thereby the concentration of the fuel as well as that of the NOx are raised to increase the temperature of the exhaust gas.

As described above, the control portion 100 controls a plurality of factors such as the opening rate of the EGR valve, the retarding rate of the injection timing, and the opening rate of the turbo charger vane in cycles, or controls at least one factor among them, to increase the NOx generation.

Hereinafter, a method for controlling an exhaust gas post-processing apparatus according to various embodiments of the present invention is described in detail with reference to the drawings.

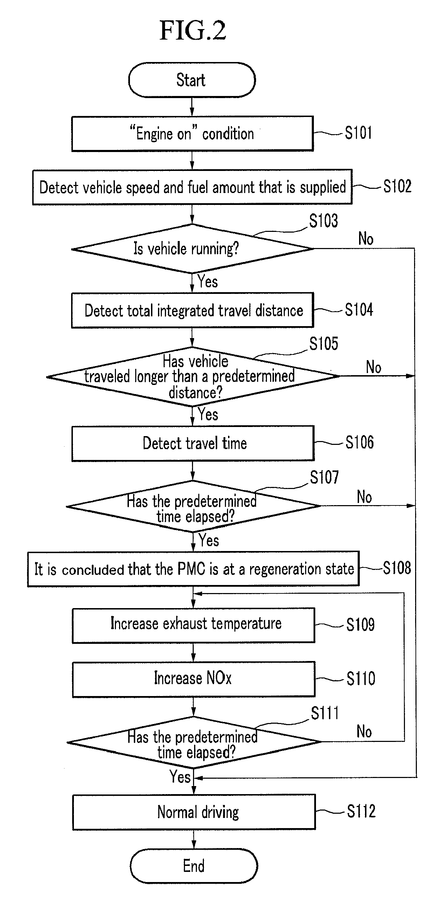

FIG. 2 shows a regeneration flowchart of a post-processing device in a diesel vehicle according to various embodiments of the present invention.

In a condition in which an engine is operating (S101), the control portion 100 detects a vehicle speed from a vehicle speed sensor and analyzes a fuel amount that is determined corresponding to the air amount that is detected by an air flow sensor 20 (S102), and the running state of the vehicle is determined by the vehicle speed and the fuel amount (S103).

Then, the total integrated travel distance of the vehicle is detected from a trip computer (S104), wherein it is determined whether the total integrated travel distance reaches the predetermined travel distance such as 10,000 km (S105).

When the total integrated travel distance is larger than the predetermined travel distance in S105, the travel time period after the engine is operated is read from the trip computer (S 106) and it is determined whether the travel time period after the engine is operated reaches the predetermined travel time period such as about 100 hours (S107).

When the total integrated travel distance is lower than the predetermined travel distance (S105) or the travel time period after the engine is operated does not reach the predetermined travel time period (S107), the PMC 60 is not regenerated and thus normal driving occurs.

However, when the total integrated travel distance is larger than the predetermined travel distance and the travel time period after the engine is operated elapses the predetermined travel time period, control portion 100 concludes that the condition for regenerating the PMC 60 is satisfied (S108).

Accordingly, the control portion 100 opens the EGR valve to prevent the exhaust gas from flowing into the combustion chamber, and therefore the combustion temperature is raised to increase exhaust temperature of the exhaust gas (S109). From this process, the NOx generation from the engine is increased so that the amount of $NO_2$ generated in DOC 50 and supplied to PMC 60 is raised (S110).

Also, the control portion 100 retards fuel injection timing and adjusts vane angle of the T/C 30 to reduce the intake air amount, and therefore the air/fuel ratio becomes rich to increase the NOx creation.

Accordingly, the DOC 50 produces a large amount of $NO_2$ to sufficiently regenerate the PMC 60.

After that, in S111, it is determined whether the operation for increasing the NOx is executed for the predetermined time period. If the predetermined time period has not elapsed it is returned to the S 109 to repeat increasing the NOx, and if the predetermined time period has elapsed it is returned to the normal driving state.

In connection with the above operation, if the condition of the predetermined travel distance and the predetermined travel time period are satisfied, the operation to securely regenerate the PMC 60 is performed.

Accordingly, the PMC achieves secure purification efficiency for the back pressure to be reduced, and therefore the fuel consumption is reduced and the catalyst for the DOC is saved.

For convenience in explanation and accurate definition in the appended claims, the terms "front" and "rear" are used to describe features of the exemplary embodiments with reference to the positions of such features as displayed in the figures.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

**Claims**

1. An exhaust gas post-processing apparatus, comprising:

    an exhaust pipe through which exhaust gas passes;
    a particulate material catalyst (PMC) that is mounted in the exhaust pipe, that collects particulate materials included in the exhaust gas, and that is regenerated by $NO_2$; and
    a control portion that increases amount of NOx supplied from an engine so as to increase amount of $NO_2$ supplied to the PMC to improve regeneration efficiency of the PMC for a predetermined time period according to driving conditions of a vehicle.

2. The exhaust gas post-processing apparatus of claim 1, further comprising a diesel oxidation catalyst (DOC) that is mounted between the engine and the PMC to purify the exhaust gas and that uses the NOx supplied from the engine to generate the $NO_2$.

3. The exhaust gas post-processing apparatus of claim 2, wherein the DOC includes a ceramic support on which platinum is coated to transform CO, HC, and NO to $CO_2$, $H_2O$, and $NO_2$.

4. The exhaust gas post-processing apparatus of claim 2, wherein the PMC collects soot and the particulate materials and is regenerated by eliminating the collected soot and the particulate materials through reaction with the $NO_2$ supplied from the DOC.

5. The exhaust gas post-processing apparatus of claim 1, wherein the driving conditions of the vehicle is determined to be satisfied and thus the control portion increases the amount of the NOx for the predetermined time period while a total integrated travel distance of the vehicle is larger than a predetermined travel distance and travel time period after the engine is operated elapses a predetermined travel time period.

6. The exhaust gas post-processing apparatus of claim 1, wherein the control portion controls air/fuel ratio, EGR valve opening rate, injection timing retarding rate, and/or vane angle of a turbo charger for the predetermined time period to increase the amount of the NOx.

7. The exhaust gas post-processing apparatus of claim 6, wherein the control portion closes the EGR valve for exhaust gas not to be re-circulated to combustion chamber of the engine to raise temperature in the combustion chamber.

8. The exhaust gas post-processing apparatus of claim 6, wherein the control portion retards the injection timing of fuel to increase the amount of the NOx.

9. The exhaust gas post-processing apparatus of claim 6, wherein the control portion adjusts an opening rate of the vane of the turbocharger to reduce intake air amount so that concentration of fuel as well as that of the NOx are raised to increase temperature of exhaust gas.

10. A regeneration method of an exhaust gas post-processing apparatus, comprising:

   a determining step in which a total integrated travel distance of a vehicle, a travel distance of the vehicle, and a travel time period after an engine is operated are detected to determine whether a condition of a PMC to be at a regeneration step is satisfied; and
   the regeneration step in which the PMC is regenerated by increasing amount of NOx supplied to the PMC, the NOx being generated by the engine for a predetermined time period, while the condition of the PMC to be at the regeneration step is determined to be satisfied.

11. The regeneration method of an exhaust gas post-processing apparatus of claim 10, wherein the condition of the PMC to be at the regeneration step is determined to be satisfied when the total integrated travel distance is larger than a predetermined travel distance and the travel time period after the engine is operated elapses a predetermined travel time period.

12. The regeneration method of an exhaust gas post-processing apparatus of claim 10, wherein the control portion controls air/fuel ratio, EGR valve opening rate, injection timing retarding rate, and/or vane angle of a turbo charger for the predetermined time period to increase the amount of the NOx.

13. The regeneration method of an exhaust gas post-processing apparatus of claim 10, wherein the control portion closes the EGR valve for exhaust gas not to be re-circulated to combustion chamber of the engine to raise temperature in the combustion chamber.

14. The regeneration method of an exhaust gas post-processing apparatus of claim 10, wherein the control portion retards the injection timing of fuel to increase the amount of the NOx.

15. The regeneration method of an exhaust gas post-processing apparatus of claim 10, wherein the control portion adjusts an opening rate of the vane of the turbocharger to reduce intake air amount so that concentration of fuel as well as that of the NOx are raised to increase temperature of exhaust gas.

# FIG.1

EP 2 128 393 A1

EP 2 128 393 A1

# FIG.2

Start

"Engine on" condition ——S101

Detect vehicle speed and fuel amount that is supplied ——S102

S103
Is vehicle running? —— No

↓Yes

Detect total integrated travel distance ——S104

S105
Has vehicle traveled longer than a predetermined distance? —— No

↓Yes

Detect travel time ——S106

S107
Has the predetermined time elapsed? —— No

↓Yes

It is concluded that the PMC is at a regeneration state ——S108

Increase exhaust temperature ——S109

Increase NOx ——S110

S111
Has the predetermined time elapsed? —— No

Yes

Normal driving ——S112

End

8

Europäisches
Patentamt
European
Patent Office
Office européen
des brevets

**EUROPEAN SEARCH REPORT**

Application Number

EP 08 17 2541

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 273 779 A (NISSAN MOTOR [JP]) 8 January 2003 (2003-01-08) * column 4, line 51 - line 55 * * column 8, line 15 - line 21 * | 1-4,6,8 | INV. F01N3/023 F01N9/00 |
| Y | * column 8, line 36 - line 44; claim 1; figures 1,6,9,10 * | 10-12,14 | |
| A | | 7,9,13, 15 | |
| | ----- | | |
| Y | US 5 287 698 A (SHINZAWA MOTOHIRO [JP] ET AL) 22 February 1994 (1994-02-22) * column 18, line 66 - column 19, line 5; figures 2,23,24 * | 10-12,14 | |
| | ----- | | |
| A | EP 1 584 802 A (ISUZU MOTORS LTD [JP]) 12 October 2005 (2005-10-12) * column 11, line 9 - column 12, line 8; figures 1,3 * | 10 | |
| | ----- | | TECHNICAL FIELDS SEARCHED (IPC) |
| A | WO 2006/123761 A (TOYOTA MOTOR CO LTD [JP]; HASHIZUME TAKESHI [JP]) 23 November 2006 (2006-11-23) * page 15, line 13 - line 18 * * page 16, line 18 - line 25; figure 1 * | 1 | F01N |
| | ----- | | |

The present search report has been drawn up for all claims

| Place of search | Date of completion of the search | Examiner |
|---|---|---|
| Munich | 2 September 2009 | Zebst, Marc |

EPO FORM 1503 03.82 (P04C01)

## ANNEX TO THE EUROPEAN SEARCH REPORT
## ON EUROPEAN PATENT APPLICATION NO.

EP 08 17 2541

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2009

| Patent document cited in search report | | Publication date | Patent family member(s) | | Publication date |
|---|---|---|---|---|---|
| EP 1273779 | A | 08-01-2003 | DE 60209831 T2 | | 17-08-2006 |
| | | | US 2002194843 A1 | | 26-12-2002 |
| US 5287698 | A | 22-02-1994 | NONE | | |
| EP 1584802 | A | 12-10-2005 | CN 1680687 A | | 12-10-2005 |
| | | | JP 4148178 B2 | | 10-09-2008 |
| | | | JP 2005299438 A | | 27-10-2005 |
| | | | US 2005223700 A1 | | 13-10-2005 |
| WO 2006123761 | A | 23-11-2006 | CN 101103183 A | | 09-01-2008 |
| | | | EP 1882088 A1 | | 30-01-2008 |
| | | | JP 2006322364 A | | 30-11-2006 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020080050298